# DEMANDE DE BREVET EUROPEEN

(11) **EP 4 495 194 A1**
(43) Date de publication de la demande: **22.01.2025**
(21) Numéro de dépôt: 24189854.3
(22) Date de dépôt: 19.07.2024
(51) Int. Cl.: C09D 5/16, C08K 3/04, C09D 183/04

(54) **COMPOSITION DE REVÊTEMENT ANTIFOULING ET REVÊTEMENT ANTIFOULING**

(30) Priorité: 21.07.2023 FR 2307862
(71) Demandeur: Eco'Prisme, 63570 Auzat-la-Combelle (FR)
(72) Inventeur: BRUNET, Eric, Michel, Charles, 63000 CLERMONT FERRAND (FR)
(74) Mandataire: Lavoix

(57) **Abrégé**

La présente invention concerne une composition destinée à former un revêtement antifouling, comprenant un sol-gel, au moins un solvant du sol-gel, notamment au moins un solvant inorganique ou organique, ou un mélange d'au moins un solvant organique et d'au moins un solvant inorganique, et du graphène ou oxyde de graphène. La composition ne comporte pas de biocide. Elle concerne aussi un revêtement ou « coating » antifouling, formé d'une couche de liant de type sol-gel contenant du graphène ou oxyde de graphène, ainsi que tout substrat revêtu d'un tel antifouling.

## Description

La présente invention concerne une nouvelle composition destinée à former un revêtement antifouling, ne nécessitant pas de biocide. L'invention concerne également le revêtement antifouling (ou antifouling), formé à la surface d'un support, ainsi que le support ainsi revêtu et protégé et tout dispositif, appareil, matériel, bâtiment flottant ou posé sur le fond (bâtiment naviguant ou non, sur l'eau douce ou salée, ce qui comprend les bateaux de navigation intérieure, y compris les petites embarcations et les bacs, ainsi que les engins flottants et les navires de mer, les plateformes pétrolières, les pieux et balises, etc.), comprenant une telle structure (le support étant par exemple une coque, une hélice, un gouvernail, un pilier, une chaîne, etc.).

Dans l'eau, selon les régions du globe et les saisons, plus de 25 000 espèces d'organismes vivants capables de coloniser les coques de bateaux ont été recensées : bactéries, algues unicellulaires, algues vertes, bernicles, éponges, vers marins, etc. L'encrassement biologique, également connu sous le nom de « fouling », est un problème commun rencontré par les propriétaires de bateaux et les opérateurs maritimes. Il fait référence à l'accumulation de ces organismes marins sur la coque des navires et d'autres surfaces immergées. Bien que cela puisse sembler être un inconvénient esthétique mineur, le fouling peut entraîner de nombreux problèmes et risques importants. Résistance à l'eau accrue : l'encrassement biologique sur la coque augmente la résistance à l'eau, ce qui entraîne une augmentation de la consommation de carburant et réduit l'efficacité énergétique du navire. Cela peut entraîner des coûts supplémentaires en carburant et une diminution de la vitesse et des performances globales. Réduction de la manoeuvrabilité : l'accumulation de fouling sur les gouvernails et les hélices peut entraîner une diminution de la manoeuvrabilité et de la capacité de contrôle du navire. Cela peut augmenter les risques de collisions et de situations dangereuses, en particulier dans les zones à forte densité de trafic maritime. Dommages matériels : les organismes marins peuvent provoquer des dommages physiques à la coque du navire, aux systèmes de refroidissement, aux prises d'eau de mer, aux hélices et à d'autres parties immergées. Ces dommages peuvent nécessiter des réparations coûteuses et entraîner des temps d'arrêt non planifiés.

La solution actuelle est l'utilisation de peintures dites « antifouling », mais celles-ci comportent des inconvénients. Risques pour l'écosystème marin : les antifouling traditionnels contiennent des biocides qui sont utilisés pour tuer les organismes marins et ainsi prévenir leur adhérence. Parmi les biocides usuels, on peut citer à titre illustratif les composés suivants : thiocyanate de cuivre, zinc éthylène bisdithiocarbamate, pyrithione de zinc, médétomidine, oxyde de cuivre. Cependant, ces biocides se dissipent dans l'eau et ont un impact néfaste sur l'écosystème marin, affectant la faune et la flore aquatiques. Impact sur la santé humaine : certains biocides utilisés dans les antifouling traditionnels peuvent également présenter des risques pour la santé humaine, en particulier pour les personnes travaillant sur les navires ou les chantiers navals où ces produits sont manipulés. Par conséquent, l'utilisation d'antifouling sans biocide offrirait une alternative plus respectueuse de l'environnement et plus sûre pour les navires, les opérateurs et l'écosystème marin.

L'invention a donc pour objectif de proposer une composition destinée à former un revêtement antifouling, générant un effet antifouling efficace en l'absence de biocide, qui soit capable de limiter ou empêcher l'encrassement biologique d'une surface immergée pendant une longue durée, notamment supérieure à 6 mois ou même pendant une ou plusieurs années.

Un autre objectif de l'invention est de proposer une telle composition qui soit aisée à mettre en oeuvre et qui soit non toxique aussi bien lors de sa fabrication, de son application sur une surface telle qu'une coque de navire, lors de sa vie immergée, puis lors du retraitement de cette surface lorsqu'il est décidé de renouveler le traitement.

Un autre objectif encore de l'invention est de fournir une telle composition qui puisse être appliquée aussi bien sur une surface neuve que sur une surface ayant reçu antérieurement un traitement antifouling d'un autre type.

Un autre objectif encore de l'invention est de fournir une telle composition qui soit d'un coût d'exploitation acceptable.

La présente invention a pour objet une composition destinée à former un revêtement antifouling, comprenant un sol-gel, au moins un solvant ou diluant du sol-gel, notamment au moins un solvant inorganique, ou au moins un solvant organique, ou un mélange d'au moins un solvant organique et d'au moins un solvant inorganique, et du graphène ou oxyde de graphène. Avantageusement, la composition ne comporte pas de biocide ou d'additif à activité biocide, il s'agit d'une « composition sans biocide », notamment sans aucun des biocides usuels listés plus haut.

Sans vouloir être lié à la théorie, on pense que la composition selon l'invention permet de produire un revêtement qui limite ou empêche l'encrassement biologique par un effet essentiellement anti-adhérent, les organismes vivants ne pouvant pas se fixer de manière efficace et durable au revêtement réalisé, ce qui limite leur fixation au revêtement ou permet une élimination facile des organismes qui se sont fixés de manière peu solide ou durable, cette élimination pouvant être réalisée par exemple par brossage ou par frottement mécanique, ou pouvant se produire de manière naturelle sous l'effet du frottement avec l'eau lors du déplacement d'une embarcation, navire ou bateau.

Par « composition destinée à former un revêtement antifouling », on entend, au sens de la présente invention, une composition destinée à être appliquée sur un élément ou surface pouvant ou devant être immergé dans l'eau. Il s'agit notamment d'une application sur la partie immergée des navires, bateaux, embarcations en tous genres, sous-marin (par exemple sur tout ou partie de la coque, de la quille, de l'hélice) ou sur la partie immergée d'un bâtiment reposant sur le fond ou d'un bâtiment ou appareil attaché au fond. Le traitement vise à éviter, retarder, ou faciliter l'élimination de l'encrassement biologique, aussi appelé « dépôt de fouling », constitué d'organismes aquatiques, entre autres d'algues et de mollusques, susceptibles de s'accrocher, se former, croître et se répandre, sur ces surfaces immergées. La composition de l'invention peut s'appliquer comme une peinture classique, par exemple au pinceau ou au rouleau, à l'aide d'un chiffon microfibre ou d'une éponge, ou encore par pulvérisation, ou tout autre moyen de mise en peinture. La composition peut être déposée sur une couche de peinture ou d'antifouling préexistante ou sur un élément neuf non revêtu ou comportant au moins une sous-couche.

La composition destinée à former un revêtement antifouling peut notamment comprendre d'environ 0,01 à environ 5%, plus particulièrement d'environ 0,1 à environ 1, 2 ou 3%, encore plus particulièrement de 0,5 à 1,2 ou 3% en poids de graphène ou d'oxyde de graphène, par rapport au poids total de la composition.

La teneur en graphène est importante en ce qui concerne l'efficacité de la composition en tant que revêtement antifouling. Une trop faible quantité de graphène ne permet pas de recouvrir complètement la surface, et une quantité trop importante utiliserait trop de sol-gel pour se fixer correctement et affaiblirait les résistances mécaniques du revêtement à l'état sec. A la fois la surface recouverte par le graphène et son interaction avec le sol-gel est en particulier liée à sa surface spécifique (2629 m²/ g pour un feuillet de graphène et 890 m²/g pour l'oxyde de graphène).

Le graphène ou l'oxyde de graphène utilisé peut être notamment sous forme d'un feuillet et/ou d'empilement de plusieurs feuillets, notamment de 2 à 10 feuillets, formant ce que l'on appelle des plaquettes. Les dimensions maximales des plaquettes peuvent varier dans certaines proportions allant notamment de 1 à 100 µm, de préférence de 5 à 20 µm. Le graphène peut aussi être sous forme de nanofils ou de nanotubes ayant de préférence ces mêmes dimensions maximales. Par « dimensions maximales », on entend la plus grande longueur d'un élément ou unité de graphène ou d'oxyde de graphène. Ces dimensions réduites sont préférées car elles favorisent une situation dans laquelle le graphène ou l'oxyde de graphène est noyé dans le revêtement, et/ou des unités de graphène peuvent affleurer à la surface, mais sans qu'il y ait une proportion élevée d'unités dépassant à l'extérieur du revêtement, susceptibles d'être arrachés.

Le graphène utilisé peut être obtenu par des méthodes de production bien connues, telles que l'exfoliation mécanique, la chimie des solutions ou la croissance en phase vapeur, dans des conditions permettant l'obtention de graphène ayant les dimensions précitées. Un calibrage peut être réalisé pour garantir que les plaquettes utilisées ont les structures et dimensions adaptées à l'invention.

La composition contient un ou plusieurs solvants en proportion suffisante pour que la composition soit suffisamment fluide pour être appliquée sur le substrat. En particulier, la proportion de solvant en poids par rapport au poids total de la composition est comprise entre environ 10 et environ 90%, de préférence entre environ 15 et environ 90%, de préférence entre environ 20 et environ 90%, de préférence entre environ 20 et environ 70 %.

L'addition du sol-gel et du graphène ou oxyde de graphène représente un extrait sec appelé ES. La composition peut donc notamment avoir un extrait sec ES compris entre environ 10 et environ 85%, de préférence entre environ 10 et environ 80%, de préférence entre environ 10 et environ 60%, en particulier entre environ 10 et environ 50, de préférence entre environ 30 et environ 45 ou 50%.

Le sol-gel est de préférence à base de silicium. Il est obtenu par le mélange et la réaction d'au moins deux précurseurs organonosilicés dans un solvant. La polymérisation de ces précurseurs créent le sol-gel. Ces précurseurs organosilicés sont notamment des alcoxydes de silicium.

Comme cela est connu en soi, un matériau sol-gel est un matériau obtenu par un procédé sol-gel consistant à utiliser comme précurseurs des alcoxydes métalliques de formule Si(OR)ₓR'₍₄₋ₓ₎ où R est un groupement alkyle (notamment en C1 à C20) et R' est un groupement porteur d'une ou de plusieurs fonctions, par exemple aryl, alcoyl, avec x pouvant varier entre 2 et 4. En présence d'eau, les groupements alcoxyle (OR) sont hydrolysés en groupements silanols (Si-OH). Ces derniers se condensent en formant des liaisons siloxane (Si-O-Si-). Il se forme des petites particules de taille généralement inférieure à 1 µm, qui s'agrègent et forment des amas qui restent en suspension sans précipiter, formant un sol. L'augmentation des amas et leur condensation augmente la viscosité du milieu qui gélifie progressivement. Un matériau solide poreux est finalement obtenu par séchage du gel, avec l'expulsion du solvant en dehors du réseau polymérique formé (synérèse).

Le sol-gel dans la composition reste suffisamment dilué dans du solvant pour que la composition soit manipulable et applicable comme un vernis ou une peinture. Les quantités des différents ingrédients (sol-gel, solvant, graphène ou oxyde de graphène, et éventuels additifs) sont donc ajustées en conséquence.

Le précurseur organosilicé utilisé dans la composition de revêtement peut être constitué d'un précurseur organosilicé unique ou d'un mélange de plusieurs (au moins deux) précurseurs organosilicés. Le ou les précurseurs sont avantageusement choisis parmi le tétraméthoxysilane (TMOS), le tétraéthoxysilane (TEOS), le méthyl triméthoxysilane (MTM), le méthyl triéthoxysilane (MTE), le phényltriméthoxysilane (PhTMOS), le phényltriéthoxysilane (PhTEOS), un chloroalkylméthoxysilane ou un chloroalkyléthoxysilane (dans lesquels l'alkyl est en C1 à C10, de préférence éthyl, méthyl ou propyl), un aminopropyltriéthoxysilane, le (3-glycidyloxypropyl)triméthoxysilane (GPTMOS) et leurs mélanges.

Plus particulièrement, le ou les précurseurs organosilicés sont choisis parmi le tétraméthoxysilane (TMOS), le tétraéthoxysilane (TEOS), le méthyl triméthoxysilane (MTM), le méthyl triéthoxysilane (MTE), le phényltriméthoxysilane (PhTMOS), le phényltriéthoxysilane (PhTEOS), le (3-aminopropyl)triéthoxysilane (APTES), le (3-glycidyloxypropyl)triméthoxysilane (GPTMOS) et leurs mélanges.

De préférence, le ou les précurseurs organosilicés sont choisis parmi le tétraméthoxysilane (TMOS), le tétraéthoxysilane (TEOS), le méthyl triméthoxysilane (MTM), le phényltriméthoxysilane (PhTMOS), le (3-aminopropyl)triéthoxysilane (APTES), le (3-glycidyloxypropyl)triméthoxysilane (GPTMOS) et leurs mélanges.

Dans des modes de réalisation, la composition comprend le tétraméthoxysilane (TMOS), le tétraéthoxysilane (TEOS), ou un mélange de TMOS et de TEOS.

La composition comprend un ou plusieurs solvants organiques, un ou plusieurs solvants inorganiques ou un mélange de solvant(s) organique(s) et de solvant(s) inorganique(s). Un solvant inorganique peut être de l'eau. Le solvant organique est notamment polaire, pratique ou aprotique. Ce solvant organique peut par exemple être choisi parmi les alcools aliphatiques linéaires en C1 à C4, notamment le méthanol, l'éthanol, le propan-2-ol, et le propan-1-ol ; ou les éthers de glycol, notamment le dipropylène glycol méthyl éther (DGME), le propylène glycol monométhyl éther, le propylène glycol monométhyl éther acétate, le propylène glycol monoéthyl éther, l'éthylène glycol monoéthyl éther, l'éthylène glycol monoéthyl éther acétate, l'éthylene glycol monobutyl éther, l'éthylène glycol monobutyl éther acétate, le diéthylène glycol monobutyl éther. De préférence, le solvant organique est de l'isopropanol (propan-2-ol), du DGME ou un mélange d'isopropanol et de DGME. Dans le cas d'un solvant aqueux, celui-ci contient avantageusement de 50 % à 100% en volume d'eau.

Un mélange de solvants organiques possible est le mélange d'isopropanol et de DGME. Lorsque du DGME est utilisé comme solvant dans un mélange de solvants, la composition peut comprendre notamment d'environ 50 à environ 80%, de préférence d'environ 70 à environ 80%, en poids de DGME, par rapport au poids total de la composition. Dans un mélange de solvants, par exemple DGME et autre solvant, par exemple isopropanol, cet autre solvant peut en tout ou partie provenir de la fabrication du sol-gel, et le DGME est un solvant ajouté lors de la formulation de la composition. A noter que cela peut s'appliquer à un autre solvant que le DGME. Ce solvant ajouté lors de la formulation est appelé solvant de dilution.

Dans un mode de réalisation la composition contient un unique solvant organique, par exemple le DGME, dans les proportions définies plus haut.

On n'exclut pas la présence en outre d'un ou plusieurs autres liants, de préférence inorganiques, mais également organiques, tels que des résines époxy, des polymères acryliques, des résines polyuréthanes, etc., dans une proportion de 1 à 30% de polymères sec par rapport au poids total de la composition.

La composition selon l'invention pourra contenir en outre un ou plusieurs autres additifs, de préférence acceptables pour l'environnement, choisis parmi les pigments (e.g. de l'oxyde de fer), les charges minérales (e.g. du carbonate de calcium, du talc, de l'aérogel), les agents mouillants (e.g. l'huile de pin), les agents dispersants (e.g. les polycarboxylates), les agents anti-sédimentation (e.g. les celluloses) et les agents plastifiants, les agents antimousses (e.g. huile minérale ou silicone), permettant la désaération du revêtement en pot mais également lors de l'application.

La composition selon l'invention pourra comprendre en particulier de 0 à 40%, notamment de 0,01 à 30% en poids d'un ou plusieurs additifs par rapport au poids total de la composition.

Selon un mode de réalisation particulier de l'invention, la composition peut comprendre, par rapport au poids total de la composition :
a. de 60 à 100% en poids du mélange sol-gel + solvant (notamment le DGME, ladite composition contenant de 10 à 45 ou 48% en poids de sol-gel en extrait sec,
b. de 0,01 à 2% en poids de graphène ou d'oxyde de graphène
c. de 0 à 30% en poids d'un ou plusieurs des additifs précités.

Le sol-gel siliceux utilisé dans cette invention peut être préparé par un procédé de sol-gel classique, impliquant la conversion du précurseur organosilicé en un réseau tridimensionnel gélifié. Le sol-gel siliceux est ensuite combiné avec du graphène, éventuellement à des composants polymériques appropriés pour former le revêtement antifouling, tels que des résines époxy, des polymères acryliques, des résines polyuréthanes.

L'application peut être effectuée comme une peinture classique, par exemple au pinceau ou au rouleau, à l'aide d'un chiffon microfibre ou d'une éponge, ou encore par pulvérisation, sur la surface à traiter, nue ou portant une couche de peinture ou d'antifouling préexistante. On laisse sécher ensuite pour obtenir le revêtement séché et durci. Le séchage peut se faire à l'air libre de manière à former une couche antifouling sèche et durcie. Le séchage peut être forcé en utilisant des moyens appropriés.

La présente invention a aussi pour objet un revêtement ou « coating » antifouling, formé d'une couche de liant de type sol-gel contenant du graphène ou oxyde de graphène. Ce revêtement est dépourvu de biocide ou d'additif à activité biocide, il s'agit d'un revêtement « sans biocide », comme la composition dont il dérive. Ce revêtement peut notamment être obtenu par application et séchage de la composition selon l'invention destinée à former un revêtement antifouling.

Notamment, le revêtement formé uniquement du sol-gel et du graphène produit un vernis transparent.

Le revêtement antifouling selon l'invention est relativement fin, avec notamment une épaisseur après séchage d'environ 5 à environ 150 µm, notamment d'environ 5 à environ 120 µm.

Dans un mode de réalisation, le revêtement antifouling selon l'invention a une épaisseur après séchage d'environ 5 à environ 120 µm, notamment d'environ 5 à environ 30 µm, de préférence d'environ 5 à environ 20 µm. Ce revêtement a notamment été obtenu à partir d'une composition ne contenant pas ou contenant peu d'additifs de type pigments et charges. Notamment, ce revêtement est transparent, il s'agit d'un vernis transparent.

Ce revêtement peut être monocouche, formant une couche unique sur le substrat.

Il peut faire partie aussi d'un ensemble bicouche, ou au moins bicouche, notamment lorsque l'on prévoit en plus de ce premier revêtement, une couche colorée. Dans ce cas, on utilise une composition destinée à former le revêtement antifouling qui comprend en plus un ou des pigments ou colorants. Cette couche colorée est destinée à apporter de l'opacité et une coloration. Elle est de préférence formée en premier, puis recouverte du vernis transparent. Son épaisseur après séchage peut être d'environ 70 à environ 150 µm, notamment d'environ 90 à environ 120 µm.

On peut aussi déposer une composition unique contenant pigment ou colorant, pour former un vernis coloré comme revêtement antifouling. Cette couche apporte de l'opacité et une coloration. Son épaisseur après séchage peut être d'environ 70 à environ 150 µm, notamment d'environ 90 à environ 120 µm.

L'invention a également pour objet tout support, surface ou article revêtu d'un tel revêtement antifouling, formé d'une couche de liant de type sol-gel contenant du graphène ou oxyde de graphène. Ce revêtement est dépourvu de biocide ou d'additif à activité biocide. Ce revêtement peut notamment être obtenu par application et séchage de la composition destinée à former un revêtement antifouling, selon l'invention. Ce revêtement peut avoir les caractéristiques de composition issues de la composition utilisée, décrite ici.

Parmi les supports susceptibles de recevoir l'antifouling de l'invention, on peut citer notamment les métaux (e.g. acier, galva, aluminium, inox, zinc, laiton), les polymères (e.g. époxy, polyuréthane, acrylique, vinylique).

La composition de l'invention peut être appliquée directement au contact de ce support, ou sur un matériau recouvrant totalement ou partiellement ce support. Il n'y a pas de limitation au matériau du support, l'homme du métier pouvant facilement éprouver l'aptitude de la composition selon l'invention à adhérer durablement à tout matériau. Il est en outre possible de prévoir une couche de matériau d'accroche ou de prétraitement, par exemple lorsque le support est réalisé en polytétrafluoroéthylène (PTFE), polyéthylène (PE) ou polypropylène (PP). Comme prétraitement, on peut citer un traitement thermique, notamment par plasma.

Le support, surface ou article revêtu d'un revêtement antifouling selon l'invention peut appartenir à tout dispositif, appareil, ou matériel, susceptible de rester au contact d'eau douce ou d'eau salée. Il peut s'agir par exemple de bâtiment flottant, sous-marin, ou posé sur le fond (bâtiment naviguant ou non, sur l'eau douce ou salée, ce qui comprend les bateaux de navigation intérieure, y compris les petites embarcations et les bacs, ainsi que les engins flottants et les navires de mer, les plateformes pétrolières, les installations de pompage ou d'extraction de liquide ou de gaz, les pieux et balises, etc.). La surface traitée peut être par exemple une coque, une hélice, un gouvernail, un pilier, une chaîne, etc.

De manière préférée, la surface est une surface d'un navire destinée à être immergée dans l'eau, telle que la coque ou la quille d'un navire.

La présente invention a également pour objet un tel dispositif, appareil, ou matériel, comprenant une surface ou un élément revêtu, totalement ou partiellement, d'une couche antifouling selon l'invention.

La particularité de l'antifouling selon l'invention est qu'il forme un film continu et résistant, avec une durabilité remarquablement longue, notamment supérieure à 6 mois, et plus précisément supérieure ou égale à 1, 2, 3, 4 ou 5 ans.

Le sol gel siliceux est un matériau inorganique amorphe dérivé de la silice, qui apporte ici d'excellentes propriétés antiadhésives, auxquelles s'ajoutent les propriétés anti-adhérentes du graphène ou de son oxyde. Cette présence conjointe permet d'obtenir un revêtement antifouling efficace pour prévenir la fixation forte et la croissance des organismes marins indésirables sur les surfaces immergées.

Le revêtement apporte en plus un glissant dans l'eau, qui permet à un navire de se déplacer plus rapidement sur l'eau ou sous l'eau.

L'invention apparaîtra plus clairement à la lecture de la description qui va suivre, donnée uniquement à titre d'exemple non limitatif.

### Exemple 1 :

Une composition incolore selon la présente invention a la composition suivante :

**[Table 1]**

| | |
|---|---|
| dipropylene glycol methyl ether | 44,3 g |
| Sol gel | 20 g |
| Graphène | 2 g |

Le sol-gel est obtenu à partir de tétraméthoxysilane et de tétraéthoxysilane, par hydrolyse des fonctionnalités triéthoxysilyle [-Si(OEt)₃].

Le graphène est sous forme de plaquettes de 1 à 4 nm d'épaisseur, comprenant de 2 à 8 feuillets, et 7,5 ± µm dans la plus grande dimension (à noter que les plaquettes sont sensiblement carrées).

Cette composition produit un vernis transparent. Elle a été utilisée pour former un revêtement antifouling sur une coque de bateau à moteur de longueur 9,3 m, de largeur 3,2 m et de hauteur 1 m.

Les couches suivantes ont été réalisées, dans cet ordre :
- Apprêt : revêtement époxy à base de solvant 5 couches de 100 µm d'épaisseur de film sec ;
- Couche de base : revêtement époxy à base de solvant (bi-composant) 1 couche, épaisseur de film sec de 100 µm ;
- Finition de la carène : le revêtement sol-gel antifouling issu de l'application et du séchage de la composition du Tableau 1 : application de la composition au chiffon microfibre en 1 couche, épaisseur de film sec comprise entre 5 et 8 µm.

Le revêtement sol-gel antifouling permet d'éviter un encrassement biologique visible dans l'eau de mer.

La même composition a été utilisée sur une coque d'une barque en bois ancienne. La coque initialement incrustée d'une quantité importante d'encrassement biologique sur le fond et mucilage sur les zones latérales, a été nettoyée à l'eau sous basse pression, toute la biomasse a été éliminée, avant d'être repeinte. Elle a ensuite a reçu une couche du revêtement sol-gel antifouling selon l'exemple 1, à l'aide d'un chiffon microfibre.

Le revêtement sol-gel antifouling permet d'éviter un encrassement biologique visible, en eau douce.

### Exemple 2 :

Une composition colorée selon la présente invention a la composition suivante :

**[Table 2]**

| | |
|---|---|
| dipropylene glycol methyl ether | 77 g |
| Sol gel selon l'exemple 1 | 20 g |
| Graphène selon l'exemple 1 | 2 g |
| Carbonate de calcium | 20 g |
| Huile de pin | 1,2 g |
| Agent d'étalement: polycarboxylate | 0,5 g |
| Oxyde de fer | 10 g |
| Agent desaérant : huile silicone ou minérale | 1 g |

Cette composition est utilisée en sous-couche du revêtement transparent de l'exemple 1.

Cette composition est aussi utilisée en couche plus épaisse comme unique couche antifouling.

### Exemple 3:

Une composition incolore selon la présente invention a la composition suivante :

**[Table 3]**

| | |
|---|---|
| dipropylene glycol methyl ether | 44,3 g |
| Sol gel de l'exemple 1 | 20 g |
| Graphène de l'exemple 1 | 2 g |
| Huile de pin | 1,2 g |

## Revendications

1. Composition destinée à former un revêtement antifouling, comprenant un sol-gel, au moins un solvant du sol-gel, et du graphène ou oxyde de graphène.

2. Composition selon la revendication 1, **caractérisée en ce qu'**elle est exempte de biocide.

3. Composition selon la revendication 1 ou 2, **caractérisée en ce qu'**elle comprend de 0,01 à 5%, plus particulièrement de 0,1 à 2% en poids de graphène ou d'oxyde de graphène par rapport au poids total de la composition.

4. Composition selon l'une quelconque des revendications 1 à 3, **caractérisée en ce que** le sol-gel et le graphène ou oxyde de graphène représentent dans la composition un extrait sec compris entre 10 et 85%, de préférence entre 10 et 60%, en particulier entre 10 et 50, de préférence entre 30 et 50%.

5. Composition selon l'une quelconque des revendications 1 à 4, **caractérisée en ce que** le précurseur organosilicé est choisi parmi le tétraméthoxysilane (TMOS), le tétraéthoxysilane (TEOS), le méthyl triméthoxysilane (MTM), le méthyl triéthoxysilane (MTE), le phényltriméthoxysilane (PhTMOS), le phényltriéthoxysilane (PhTEOS), un chloroalkylméthoxysilane ou un chloroalkyléthoxysilane avec un alkyl en C1 à C10, un aminopropyltriéthoxysilane, comme de préférence le (3-aminopropyl)triéthoxysilane (APTES), le (3-glycidyloxypropyl)triméthoxysilane (GPTMOS), et leurs mélanges.

6. Composition selon l'une quelconque des revendications 1 à 5, **caractérisée en ce que** le solvant comprend un solvant organique, un solvant inorganique, ou un mélange de solvant organique et de solvant inorganique, le solvant organique étant de préférence choisi parmi les alcools aliphatiques linéaires en C1 à C4, notamment le méthanol, l'éthanol, le propan-2-ol, et le propan-1-ol ; ou les éthers de glycol, notamment le dipropylène glycol méthyl éther (DGME), le propylène glycol monométhyl éther, le propylène glycol monométhyl éther acétate, le propylène glycol monoéthyl éther, l'éthylène glycol monoéthyl éther, l'éthylène glycol monoéthyl éther acétate, l'éthylene glycol monobutyl éther, l'éthylène glycol monobutyl éther acétate, le diéthylène glycol monobutyl éther.

7. Composition selon l'une quelconque des revendications 1 à 6, caractérisée en ce la proportion de solvant en poids par rapport au poids total de la composition est comprise entre environ 10 et environ 90%, de préférence entre environ 15 et environ 90%, de préférence entre 20 et 90%, de préférence entre 20 et 70 %.

8. Revêtement antifouling, formé d'une couche de liant de type sol-gel contenant du graphène ou de l'oxyde de graphène.

9. Revêtement antifouling selon la revendication 8, **caractérisé en ce qu'**il est exempt de biocide.

10. Revêtement antifouling selon la revendication 8 ou 9, **caractérisé en ce qu'**il a une épaisseur d'environ 5 à environ 150 µm, notamment d'environ 5 à environ 120 µm.

11. Revêtement antifouling selon l'une quelconque des revendications 8 à 10, **caractérisé en ce qu'**il résulte de l'application et du séchage d'une composition selon l'une quelconque des revendications 1 à 7.

12. Support, surface ou article revêtu d'un revêtement selon l'une quelconque des revendications 8 à 11, le support, la surface ou l'article appartenant à un dispositif, appareil, ou matériel, susceptible de rester au contact d'eau douce ou d'eau salée.
